# EUROPEAN PATENT APPLICATION

(11) **EP 4 489 029 A1**
(43) Date of publication of application: **08.01.2025**
(21) Application number: 23759491.6
(22) Date of filing: 06.01.2023
(51) Int. Cl.: H01B 1/06, H01M 4/13, H01M 4/36, H01M 4/62

(54) **SOLID ELECTROLYTE COMPOSITION AND NON-AQUEOUS ELECTROLYTE SECONDARY BATTERY**

(30) Priority: 28.02.2022 JP 2022030118
(71) Applicant: Panasonic Intellectual Property Management Co., Ltd., Osaka-shi, Osaka 540-6207 (JP)
(72) Inventor: HARA, Kohei, Kadoma-shi, Osaka 571-0057 (JP); HIBINO, Mitsuhiro, Kadoma-shi, Osaka 571-0057 (JP)
(74) Representative: Novagraaf International SA
(86) International application number: PCT/JP2023/000181
(87) International publication number: WO 2023/162485

(57) **Abstract**

One example of an embodiment of the present invention is a non-aqueous electrolyte secondary battery in which a cover film composed of a solid electrolyte composition is formed on a surface of an electrode and at least a portion of the particulate surface of an active material constituting the electrode. One example of an embodiment of the present invention is a solid electrolyte composition comprising: a first polymer in which an acidic functional group having an alkali metal ion is bonded to the main chain; and second polymer having an electron-donating polar group.

## Description

### TECHNICAL FIELD

The present disclosure relates to a composition for a solid electrolyte and a non-aqueous electrolyte secondary battery using this composition.

### BACKGROUND ART

Non-aqueous electrolyte secondary batteries such as lithium-ion batteries have been widely used for use requiring a high capacity such as on-board use and power storage use. The non-aqueous electrolyte secondary battery typically includes: an electrode assembly in which a positive electrode and a negative electrode are stacked or wound via a separator; and a non-aqueous electrolyte liquid. In recent years, a battery using a solid electrolyte instead of the electrolyte liquid has been actively investigated. For example, Patent Literature 1 discloses a solid electrolyte material constituted with Li, M, and X, wherein M represents at least one element selected from the group consisting of metal elements other than Li and semimetal elements, X represents at least one element selected from the group consisting of F, Cl, Br, and I, and the solid electrolyte material has a specific X-ray diffraction pattern.

Patent Literature 2 discloses an electrode for a lithium-ion secondary battery in which a porous film having an ionic liquid, an electrolyte, and cellulose is formed on a positive electrode or a negative electrode. Patent Literature 2 describes an effect that permeation of the electrolyte in an entirety of the battery may be promoted to shorten a time required for stabilizing battery performance.

### CITATION LIST

### PATENT LITERATURE

PATENT LITERATURE 1: Japanese Unexamined Patent Application Publication No. 2020-109047
PATENT LITERATURE 2: Japanese Unexamined Patent Application Publication No. 2011-228114

### SUMMARY

The solid electrolyte used for the non-aqueous electrolyte secondary battery such as the lithium-ion battery is required to have high conductance and transport number as for ions involved in battery reactions. In addition, the solid electrolyte is expected to inhibit side reactions to improve battery performance. However, the non-aqueous electrolyte secondary battery using the conventional solid electrolyte has not achieved sufficient performance, and still has large room for improvement.

A composition for a solid electrolyte according to the present disclosure includes: a first polymer in which an acidic functional group having an alkali metal ion is bonded to a main chain; and a second polymer having an electron-donating polar group.

A non-aqueous electrolyte secondary battery according to the present disclosure is a non-aqueous electrolyte secondary battery comprising: an electrode; and a non-aqueous electrolyte, wherein a coating composed of the above composition for a solid electrolyte is formed on at least a part of a surface of the electrode or on particle surfaces of an active material constituting the electrode.

According to the composition for a solid electrolyte of the present disclosure, the solid electrolyte having high ion conductance and transport number may be provided. The non-aqueous electrolyte secondary battery in which the composition for a solid electrolyte according to the present disclosure is applied for a positive electrode or a negative electrode is unlikely to cause side reactions, resulting in excellent storage characteristics, for example.

### BRIEF DESCRIPTION OF DRAWING

FIG. 1 is a sectional view of a non-aqueous electrolyte secondary battery of a first embodiment.
FIG. 2 is a view illustrating a particle cross section of a positive electrode active material.
FIG. 3 is a sectional view of a non-aqueous electrolyte secondary battery of a second embodiment.

### DESCRIPTION OF EMBODIMENTS

The present inventors have made intensive investigation to develop the solid electrolyte that contributes to improvement of performance of the non-aqueous electrolyte secondary battery, and consequently ascertained that a solid electrolyte composed of a first polymer in which an acidic functional group having an alkali metal ion is bonded to a main chain and a second polymer having an electron-donating polar group has high ion conductance and transport number as for ions involved in battery reactions, such as lithium ions.

In the solid electrolyte according to the present disclosure, anions to be scaffolds for lithium ions are immobilized on the main chain of the first polymer. Accordingly, segment motion of the second polymer allows lithium ions received from the first polymer to smoothly move. It is considered that such a mechanism achieves ion conductivity with a high transport number.

Hereinafter, an example of an embodiment of the composition for a solid electrolyte of the present disclosure and the non-aqueous electrolyte secondary battery using this composition will be described in detail with reference to the drawings. Note that the scope of the present disclosure includes a configuration composed of selective combination of constituents of a plurality of embodiments and modified examples described hereinafter.

### <First Embodiment>

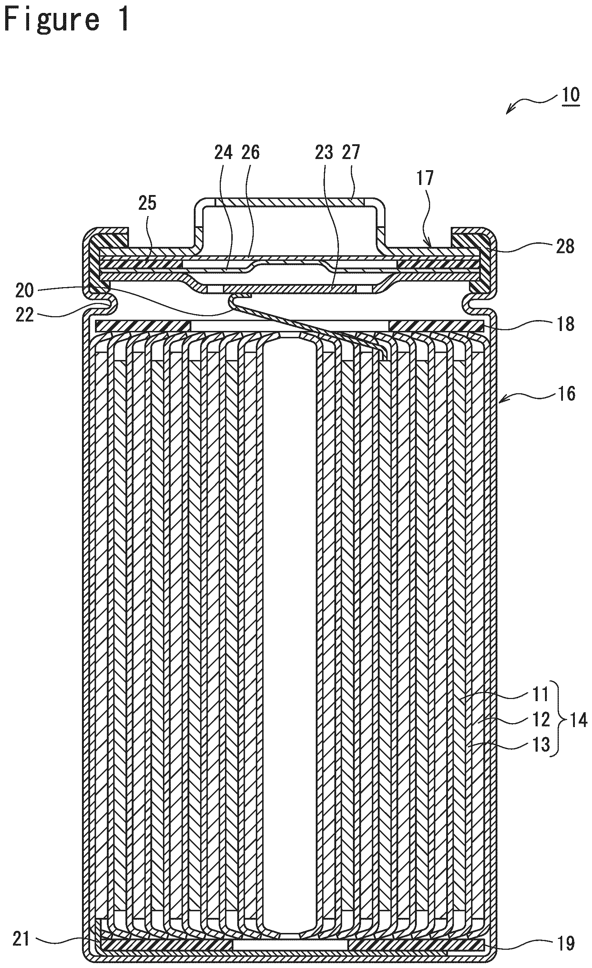

FIG. 1 is a view schematically illustrating a vertical cross section of a non-aqueous electrolyte secondary battery 10 of a first embodiment. As illustrated in FIG. 1, the non-aqueous electrolyte secondary battery 10 comprises the wound electrode assembly 14, an electrolyte, and the exterior housing can 16 housing the electrode assembly 14 and the non-aqueous electrolyte. The electrode assembly 14 has a positive electrode 11, a negative electrode 12, and a separator 13, and has a wound structure in which the positive electrode 11 and the negative electrode 12 are spirally wound via the separator 13. The exterior housing can 16 is a bottomed cylindrical metallic container having an opening on one side in an axial direction, and the opening of the exterior housing can 16 is sealed with a sealing assembly 17. Hereinafter, for convenience of description, the sealing assembly 17 side of the battery will be described as the upper side, and the bottom side of the exterior housing can 16 will be described as the lower side.

Although a detail will be described later, the composition for a solid electrolyte is applied for the positive electrode 11. Specifically, the composition for a solid electrolyte is applied as a coating 32 formed on particle surfaces of a lithium-containing composite oxide 31 constituting a positive electrode active material 30. As an effect of the coating 32 of the solid electrolyte, side reactions on the positive electrode 11 are sufficiently inhibited, and oxidation current derived from the side reactions may be effectively reduced.

The non-aqueous electrolyte includes a non-aqueous solvent and an electrolyte salt dissolved in the non-aqueous solvent. For the non-aqueous solvent, esters, ethers, nitriles, amides, a mixed solvent of two or more thereof, and the like are used, for example. The non-aqueous solvent may contain a halogen-substituted derivative in which hydrogen of these solvents is at least partially replaced with a halogen atom such as fluorine. An example of the non-aqueous solvent includes ethylene carbonate (EC), ethyl methyl carbonate (EMC), dimethyl carbonate (DMC), diethyl carbonate (DEC), and a mixed solvent thereof. For the electrolyte salt, a lithium salt such as LiPF₆ is used, for example.

The positive electrode 11, the negative electrode 12, and the separator 13, which constitute the electrode assembly 14, are all a band-shaped elongated body, and spirally wound to be alternately stacked in a radial direction of the electrode assembly 14. To prevent precipitation of lithium, the negative electrode 12 is formed to be one size larger than the positive electrode 11. That is, the negative electrode 12 is formed to be longer than the positive electrode 11 in a longitudinal direction and a width direction (short direction). Two of the separators 13 are formed to be one size larger than at least the positive electrode 11, and disposed to sandwich the positive electrode 11, for example. The electrode assembly 14 has a positive electrode lead 20 connected to the positive electrode 11 by welding or the like and a negative electrode lead 21 connected to the negative electrode 12 by welding or the like.

The first embodiment exemplifies a cylindrical battery in which an electrode assembly 14 having a wound structure is housed in a bottomed cylindrical exterior housing can 16, but the electrode assembly may be a stacked electrode assembly in which a plurality of positive electrodes and negative electrodes are alternately stacked one by one via a separator. The form of the battery is not limited to the cylindrical shape, and may be a rectangular battery, a laminate battery, a coin-shaped battery, or the like.

The positive electrode 11 has a positive electrode core and a positive electrode mixture layer formed on the positive electrode core. For the positive electrode core, a foil of a metal stable within a potential range of the positive electrode 11, such as aluminum and an aluminum alloy, a film in which such a metal is disposed on a surface layer, or the like may be used. The positive electrode mixture layer includes a positive electrode active material, a conductive agent, and a binder, and is preferably formed on both surfaces of the positive electrode core except for an exposed portion where a positive electrode lead 20 is to be welded. The positive electrode 11 may be produced by, for example, applying a positive electrode slurry including the positive electrode active material, the conductive agent, the binder, and the like on the positive electrode core, and drying and then compressing the coating film to form the positive electrode mixture layer on both surfaces of the positive electrode core.

Examples of the conductive agent included in the positive electrode mixture layer may include carbon materials such as carbon black such as acetylene black and Ketjenblack, graphite, carbon nanotube (CNT), carbon nanofiber, and graphene. Examples of the binder included in the positive electrode mixture layer may include fluorine-containing resins such as polytetrafluoroethylene (PTFE) and polyvinylidene fluoride (PVdF), polyacrylonitrile (PAN), a polyimide, an acrylic resin, and a polyolefin. These resins may be used in combination with carboxymethylcellulose (CMC) or a salt thereof, polyethylene oxide (PEO), and the like.

The negative electrode 12 has a negative electrode core and a negative electrode mixture layer formed on the negative electrode core. For the negative electrode core, a foil of a metal stable within a potential range of the negative electrode 12, such as copper and a copper alloy, a film in which such a metal is disposed on a surface layer, or the like may be used. The negative electrode mixture layer includes a negative electrode active material, a binder, and as necessary a conductive agent, and preferably formed on both surfaces of the negative electrode core except for an exposed portion where a negative electrode lead 21 is to be welded. The negative electrode 12 may be produced by applying a negative electrode slurry including the negative electrode active material, the binder, and the like on the surfaces of the negative electrode core, and drying and then compressing the coating film to form the negative electrode mixture layer on both surfaces of the negative electrode core.

The negative electrode mixture layer typically includes a carbon material that reversibly occludes and releases lithium ions, as the negative electrode active material. A preferable example of the carbon material is graphite such as: a natural graphite such as flake graphite, massive graphite, and amorphous graphite; and an artificial graphite such as massive artificial graphite (MAG) and graphitized mesophase-carbon microbead (MCMB). As the negative electrode active material, an active material including at least one of an element that forms an alloy with Li, such as Si and Sn, and a compound containing such an element may be used. A preferable example of the active material is a Si-containing material in which Si fine particles are dispersed in a SiO₂ phase, a silicate phase such as lithium silicate, or an amorphous carbon phase. As the negative electrode active material, graphite and the Si-containing material may be used in combination.

For the binder included in the negative electrode mixture layer, a fluororesin, PAN, a polyimide resin, an acrylic resin, a polyolefin, and the like may be used as in the case of the positive electrode 11, but styrene-butadiene rubber (SBR) is preferably used. The negative electrode mixture layer preferably includes CMC or a salt thereof, polyacrylic acid (PAA) or a salt thereof, polyvinyl alcohol (PVA), and the like. Among these, SBR; and CMC or a salt thereof or PAA or a salt thereof are preferably used in combination. The negative electrode mixture layer may include a conductive agent such as CNT.

For the separator 13, a porous sheet having an ion permeation property and an insulation property is used. Specific examples of the porous sheet include a fine porous thin film, a woven fabric, and a nonwoven fabric. As a material of the separator 13, a polyolefin such as polyethylene and polypropylene, cellulose, and the like are preferable. The separator 13 may have a single-layer structure or a multilayer structure. On a surface of the separator 13, a resin layer having high heat resistance, such as an aramid resin, may be formed. On an interface between the separator 13 and at least one of the positive electrode 11 and the negative electrode 12, a filler layer including an inorganic filler may be formed.

Insulating plates 18 and 19 are disposed on the upper and lower sides of the electrode assembly 14, respectively. In the example illustrated in FIG. 1, the positive electrode lead 20 extends through a through hole of the insulating plate 18 toward the sealing assembly 17 side, and the negative electrode lead 21 extends through an outside of the insulating plate 19 toward the bottom side of the exterior housing can 16. The positive electrode lead 20 is connected to a lower surface of an internal terminal plate 23 of the sealing assembly 17 by welding or the like, and a cap 27, which is a top plate of the sealing assembly 17 electrically connected to the internal terminal plate 23, becomes a positive electrode terminal. The negative electrode lead 21 is connected to a bottom inner surface of the exterior housing can 16 by welding or the like, and the exterior housing can 16 becomes a negative electrode terminal.

A gasket 28 is provided between the exterior housing can 16 and the sealing assembly 17 to achieve sealability inside the battery. On the exterior housing can 16, a grooved portion 22 in which a part of a side wall thereof projects inward to support the sealing assembly 17 is formed. The grooved portion 22 is preferably formed in a circular shape along a circumferential direction of the exterior housing can 16, and supports the sealing assembly 17 with the upper face thereof. The sealing assembly 17 is fixed on the upper part of the exterior housing can 16 with the grooved portion 22 and with an end of the opening of the exterior housing can 16 caulked to the sealing assembly 17.

The sealing assembly 17 has a stacked structure of the internal terminal plate 23, a lower vent member 24, an insulating member 25, an upper vent member 26, and the cap 27 in this order from the electrode assembly 14 side. Each member constituting the sealing assembly 17 has, for example, a disk shape or a ring shape, and each member except for the insulating member 25 is electrically connected to each other. The lower vent member 24 and the upper vent member 26 are connected at each of central parts thereof, and the insulating member 25 is interposed between each of the circumferential parts. If the internal pressure of the battery increases due to abnormal heat generation, the lower vent member 24 is deformed so as to push the upper vent member 26 up toward the cap 27 side and breaks, and thereby a current pathway between the lower vent member 24 and the upper vent member 26 is cut off. If the internal pressure further increases, the upper vent member 26 breaks, and gas is discharged through an opening of the cap 27.

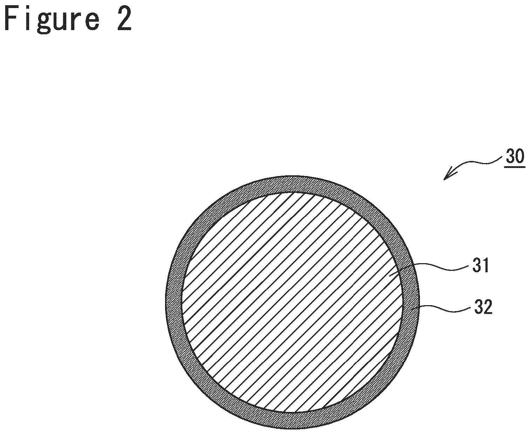

Hereinafter, the positive electrode active material 30, specifically a coating 32 formed on the particle surfaces of the positive electrode active material 30 and a composition for a solid electrolyte to constitute the coating 32, will be described in detail with reference to FIG. 2.

FIG. 2 is a view schematically illustrating the particle cross section of the positive electrode active material 30 included in the mixture layer of the positive electrode 11. As illustrated in FIG. 2, the positive electrode active material 30 has a particle lithium-containing composite oxide 31 and the coating 32 formed on the particle surfaces of the lithium-containing composite oxide 31. The coating 32 is a coating of the solid electrolyte, and preferably covers substantial entirety of the particle surfaces of the lithium-containing composite oxide 31. It is considered that providing the coating 32 effectively inhibits side reactions on the positive electrode 11, and the non-aqueous electrolyte secondary battery using the positive electrode active material 30 has excellent storage characteristics, cycle characteristics, and the like, for example.

The lithium-containing composite oxide 31 has, for example, a layered crystal structure. Specific examples thereof include a layered structure belonging to the space group R-3m or a layered structure belonging to the space group C2/m. The lithium-containing composite oxide 31 may be of secondary particles formed by aggregation of a large number of primary particles. The coating 32 is formed on, for example, surfaces of the secondary particles of the lithium-containing composite oxide 31.

A median diameter (D50) of the lithium-containing composite oxide 31 on a volumetric basis is, for example, greater than or equal to 3 µm and less than or equal to 30 µm, and preferably greater than or equal to 5 µm and less than or equal to 25 µm. When the lithium-containing composite oxide 31 is of the secondary particles of aggregate of the primary particles, the D50 of the composite oxide means D50 of the secondary particles. The D50 means a particle diameter at which a cumulative frequency is 50% from a smaller particle diameter side in a particle size distribution on a volumetric basis. The particle size distribution of the composite oxide may be measured by using a laser diffraction-type particle size distribution measuring device (for example, MT3000II, manufactured by MicrotracBEL Corp.) with water as a dispersion medium.

The lithium-containing composite oxide 31 is a composite oxide containing a metal element such as Co, Mn, Ni, and Al in addition to Li. The metal element contained in the lithium-containing composite oxide 31 is, for example, at least one selected from the group consisting of Mg, Al, Ca, Sc, Ti, V, Cr, Mn, Fe, Co, Ni, Cu, Zn, Ga, Ge, Y, Zr, Sn, Sb, W, Pb, and Bi. Among these, at least one selected from the group consisting of Co, Ni, and Mn is preferably contained. A preferable example of the composite oxide is a composite oxide containing Ni, Co, and Mn, or a composite oxide containing Ni, Co, and Al.

The coating 32 is composed of the composition for a solid electrolyte as noted above, and preferably formed on an entire region of the particle surfaces of the lithium-containing composite oxide 31 with a uniform thickness. The thickness of the coating 32 is, for example, greater than or equal to 5 nm and less than or equal to 200 nm, and preferably greater than or equal to 10 nm and less than or equal to 100 nm. The thickness of the coating 32 within the above range may more effectively inhibit side reactions while achieving smooth motion of lithium ions. The thickness of the coating 32 may be determined by forming a particle cross section of the positive electrode active material 30 with a cross section polisher (CP) and observing the particle cross section with a scanning electron microscope (SEM).

The coating 32 is formed on the particle surfaces of the lithium-containing composite oxide 31 by, for example, spray-drying a raw material liquid in which the lithium-containing composite oxide 31 is dispersed and dissolving the composition for a solid electrolyte. Detail conditions of the spray drying will be described later. Examples of the method other than the spray drying include: a method of spraying a solution of the composition for a solid electrolyte toward powder of the lithium-containing composite oxide 31; and a method of immersing powder of the lithium-containing composite oxide 31 in a solution of the composition for a solid electrolyte.

The composition for a solid electrolyte constituting the coating 32 includes: a first polymer in which an acidic functional group having an alkali metal ion is bonded to a main chain; and a second polymer having an electron-donating polar group. Although the composition for a solid electrolyte may include a component other than the first and second polymers within a range not impairing the object of the present disclosure, the composition for a solid electrolyte preferably includes the first and second polymers at greater than or equal to 50 mass%. The composition for a solid electrolyte may be composed of substantially only the first and second polymers.

The first polymer and the second polymer preferably form a uniform composite in an entirety of the composition. A mixing ratio between the first polymer and the second polymer is decided with considering, for example, a mole ratio between the alkali metal ion in the first polymer and the electron-donating polar group in the second polymer. As an example, the two polymers are blended so that the mole ratio between the alkali metal ion and the polar group is greater than or equal to 1:5 and less than or equal to 1: 100, preferably greater than or equal to 1: 10 and less than or equal to 1:50. In this case, the effect of improving the conductance of metal ions becomes more remarkable. The two polymers may form a composite as a state of an aqueous solution, for example.

The first polymer may be any polymer including the acidic functional group that traps the alkali metal ion, and has a weight-average molecular weight (Mw) of greater than or equal to 500. The polymer herein means a molecule having Mw of greater than or equal to 500 unless otherwise mentioned. The molecular weight of the first polymer is not particularly limited, but Mw is preferably greater than or equal to 100,000, and more preferably greater than or equal to 300,000. The alkali metal ion trapped by the acidic functional group may be sodium ion (Na⁺), potassium ion (K⁺), and the like, but preferably lithium ion (Li⁺).

The main chain of the first polymer may be any electrically stable molecular structure that may achieve a composition easily applied on the electrode surface and the particle surfaces of the active material. An example of the main chain includes polyethylene glycol, polyethylene oxide, polyvinyl alcohol, and polysaccharides such as cellulose. Among these, cellulose or a derivative thereof (for example, CMC or the like) is preferable. At least a part of the main chain of the first polymer is preferably composed of cellulose or a derivative thereof, and substantially all the main chains may be composed of cellulose or a derivative thereof.

The acidic functional group in the first polymer is an anionic group to be a counter of the alkali metal ion such as Li⁺, and bonded to the main chain. That is, the anionic group is fixed with the main chain to be immobilized, and thereby the conduction of the alkali metal ion with a high transport number may be achieved. The acidic functional group may be any group that may be bonded to the main chain and trap the alkali metal ion. An example of the acidic functional group includes a carboxylic acid group, a sulfonic acid group, and a phosphorous acid group. Among these, a phosphorous acid group is preferable from the viewpoints of flame retardancy and the like.

A preferable example the first polymer is a polymer in which a phosphorous acid group to trap Li⁺ is introduced on the main chain of cellulose and represented by the following Formula 1.

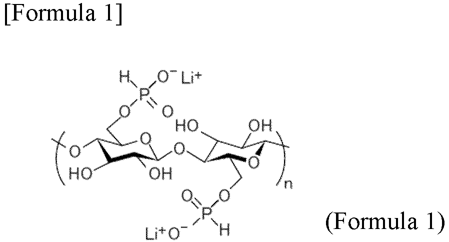

In the first polymer represented by Formula 1, greater than or equal to 20% and less than or equal to 60% or greater than or equal to 30% and less than or equal to 50% of OH groups in cellulose are preferably substituted with the phosphorous acid group.

The first polymer may be synthesized by, for example, introducing the acidic functional group on the main chain, and exchanging a counter cation of the acidic functional group into the alkali metal ion. As represented by the following Formula 2, an imidazolium salt of an acid (imidazolium phosphate or the like) may be used for introducing the acidic functional group. Then, the imidazolium cation is removed by using an ion-exchanging resin and the acidic polymer is neutralized with lithium hydroxide or the like to exchange the counter cation of the acidic functional group into lithium ion. A detail of the synthesis method of the first polymer will be described later.

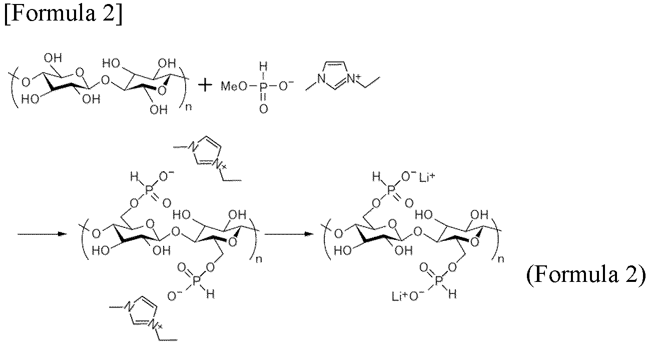

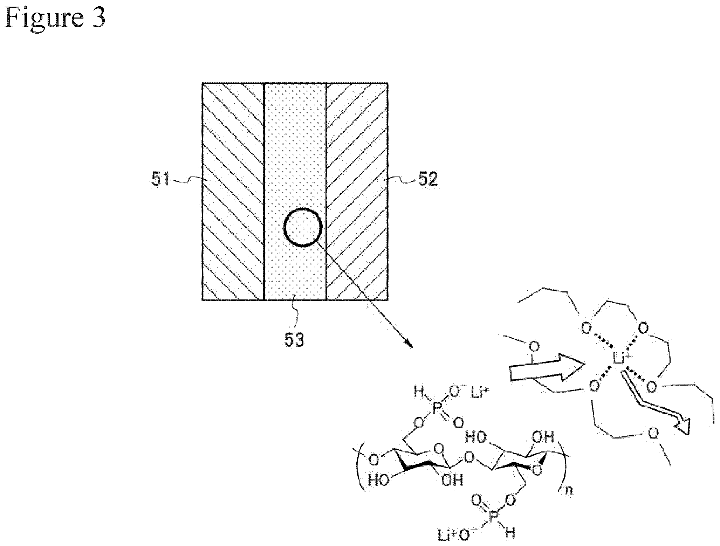

The second polymer may be any polymer including the electron-donating polar group. A molecular weight of the second polymer may be appropriately changed depending on the applying method for the battery and the like, and an example of Mn is greater than or equal to 1000. As illustrated in FIG. 3 described later, the second polymer receives the alkali metal ion from the acidic functional group in the first polymer to move the ion with the segment motion of the molecule. It is considered that the solid electrolyte of the present embodiment consequently has high ion conductance. In addition, in this case, it is considered that the electron-donating polar group coordinates with the alkali metal ion and traps the alkali metal ion.

An example of the second polymer includes polypropylene oxide, polyacrylonitrile, polyvinyl chloride, polyethylene glycol (PEG), and polyethylene oxide (PEO). Among these, the second polymer preferably includes at least one of PEG and PEO, and may be composed of substantially only PEG or PEO.

Although PEG and PEO have similar molecular structures, those having Mn of less than or equal to 20000 is defined as PEG, and those having Mn of more than 20000 is defined as PEO in typical. A molecular weight of PEG applied for the second polymer is, for example, Mn of greater than or equal to 500 and less than or equal to 20000. A molecular weight of PEO is, for example, Mn of greater than or equal to 30000 and less than or equal to 5000000.

### <Second Embodiment>

FIG. 3 is a view schematically illustrating a cross section of a main part of a non-aqueous electrolyte secondary battery of the second embodiment. As illustrated in FIG. 3, the non-aqueous electrolyte secondary battery of the second embodiment comprises a positive electrode 51, a negative electrode 52, and a solid electrolyte film 53. The positive electrode 51 and the negative electrode 52 are disposed opposite to each other via the solid electrolyte film 53. The solid electrolyte film 53 is a thin film composed of the above composition for a solid electrolyte, and has a thickness of, for example, approximately greater than or equal to 10 µm and less than or equal to 20 µm. The solid electrolyte film 53 is composed of a first polymer including a counter anion (acidic functional group) immobilized on the main chain and a second polymer to receive an alkali metal ion from the first polymer to move the alkali metal ion, and has high ion conductance and transport number.

The solid electrolyte film 53 is formed on, for example, a surface of the positive electrode 51 or the negative electrode 52. That is, the positive electrode 51 and the negative electrode 52 are integrated. For example, the solid electrolyte film 53 (solid electrolyte layer) may be formed on the surface of the positive electrode 51 or the negative electrode 52 by applying a solution of the composition for a solid electrolyte on the surface of the positive electrode 51 or the negative electrode 52, and drying the applied film. The solid electrolyte film 53 functions as an electrolyte having alkali-metal-ion conductivity and functions as a separator to prevent electric contact between the positive electrode 51 and the negative electrode 52.

As noted above, the coating composed of the composition for a solid electrolyte according to the present disclosure is applied for the non-aqueous electrolyte secondary battery by forming the coating on at least a part of the surface of the electrode or on the particle surfaces of the active material constituting the electrode. The coating may be formed on the electrode surface or the particle surfaces of the active material, or may be formed on both of the electrode surface and the particle surfaces of the active material. The coating may be formed on the electrode surface by disposing the active material having the coating on the particle surfaces on the electrode surface. Note that a film of the composition for a solid electrolyte may be formed to produce an independent solid electrolyte film, and this film may be interposed between the positive electrode and the negative electrode.

### EXAMPLES

Hereinafter, the present disclosure will be further described with Experimental examples, but the present disclosure is not limited to these Experimental examples.

### <Experimental Example 1>

### [Synthesis of Composition for Solid Electrolyte]

A synthesis procedure of a composition for a solid electrolyte was as follows.
(1) Into 2 mL of DMSO, 0.5 g of α-cellulose (manufactured by Sigma-Aldrich, Mw: approximately 300000) was dispersed.
(2) Into a round-bottom flask, 24.5 g of 1-ethyl-3-methylimidazolium methyl phosphate (manufactured by Solvionic) was collected, a stirrer bar was added, and the content was heated at 80°C.
(3) The cellulose dispersion obtained in (1) was fed into the round-bottom flask, and the content was stirred at 80°C to dissolve cellulose.
(4) The content was heated to 100°C and stirred for 76 hours (phosphonylation reaction of cellulose).
(5) The reaction liquid was diluted with water, and purified with ultrapure water by using a dialysis membrane (manufactured by Thermo Fisher Scientific K.K., Slide-A-lyzer, MWCO: 20K).
(6) The obtained aqueous solution was mixed with strongly acidic ion-exchanging resin (manufactured by ORGANO CORPORATION, IR124(H)-HG) to remove the imidazolium cation at a terminal of the phosphorous acid group.
(7) A lithium hydroxide aqueous solution was fed into the acid aqueous solution for neutralization, and the terminal of the phosphorous acid group was lithiated.
(8) The obtained aqueous solution was concentrated with an evaporator, and the condensed liquid was poured in a flat petri dish made of PFA and naturally dried.
(9) The film obtained on the petri dish was dried in vacuo at 100°C to obtain lithium-ion-containing phosphonylated cellulose.
(10) The lithium-ion-containing phosphonylated cellulose and PEO having Mn of 300000 were mixed so that a mole ratio between Li and EO was 1:20, and this mixture was dissolved in water to form an aqueous solution state. Aqueous solution of them may be separately prepared and then mixed. From the above steps, the aqueous solution of the composition for a solid electrolyte was obtained.

### [Production of Positive Electrode Active Material]

As a lithium-containing composite oxide, a composite oxide having D50 of 6 µm and represented by LiNi_{0.5}Co_{0.2}Mn_{0.3}O₂ was used. The lithium-containing composite oxide was added into the above aqueous solution of the composition for a solid electrolyte so that the solid-content concentration was 7.4 mass%, and a dispersion treatment was performed with ultrasound for 20 minutes to obtain a raw material liquid for spray drying. The raw material liquid was supplied in a spray-drying apparatus (manufactured by TOKYO RIKAKIKAI CO., LTD., SD-1010) and spray-dried under the following conditions to obtain a positive electrode active material in which a coating composed of the composition for a solid electrolyte was formed on particle surfaces of the lithium-containing composite oxide with a thickness of approximately 20 nm.

### (Spray-Drying Conditions)

Inlet temperature: approximately 160°C
Outlet temperature: approximately 90°C
Atomizing pressure: 100 kPa
Blower airflow: 0.6 m³/min

### [Production of Positive Electrode]

Into a positive electrode mixture including the above positive electrode active material, PVdF, and acetylene black at a mass ratio of 91.5:3.0:5.5, N-methyl-2-pyrrolidone (NMP) was added, and the mixture was stirred to prepare a positive electrode slurry. Then, the positive electrode slurry was applied on a surface of a positive electrode core composed of aluminum foil, and the applied film was dried and then compressed to produce a positive electrode in which a positive electrode mixture layer having a thickness of greater than or equal to 40 µm and less than or equal to 43 µm and a density of 3.0 g/cm³ was formed on one surface of the aluminum foil.

### [Preparation of Non-Aqueous Electrolyte Liquid]

Into a solvent in which ethylene carbonate (EC), dimethyl carbonate (DMC), and ethyl methyl carbonate (EMC) were mixed at a volume ratio (25°C) of 20:75:5, LiPF₆ was dissolved at a concentration of 1.3 mol/L to prepare a non-aqueous electrolyte.

### [Production of Test Cell]

The above positive electrode and a lithium metal negative electrode were disposed opposite to each other via a laminate of a separator / a nonwoven fabric / a separator, and this was housed in an exterior (UFO cell) made of SUS. Subsequently, the above non-aqueous electrolyte liquid was injected into the exterior, and the exterior was sealed to obtain a test cell having a design capacity of greater than or equal to 2.5 mAh and less than or equal to 2.6 mAh.

### <Experimental Example 2>

A test cell was produced in the same manner as in Experimental Example 1 except that, in the production of the positive electrode active material, the composition for a solid electrolyte was not added into the raw material liquid supplied in the spray-drying apparatus.

Each of the test cells of Experimental Examples 1 and 2 was subjected to a charge-discharge test and a trickle charge test. Table 1 shows the evaluation results. A smaller integrated quantity of electricity in the trickle charge test means more inhibition of side reactions of the cell and more excellent storage characteristics.

### [Charge-Discharge Test]

A charge capacity and a discharge capacity of the evaluation target test cell were determined with the following charge and discharge, and a rate of the discharge capacity to the charge capacity was calculated as first charge-discharge efficiency.

### (Charge)

Under a temperature environment at 25°C, the evaluation target test cell was charged at a constant current at 0.1 C until a cell voltage reached 4.5 V, and then charged at a constant voltage at 4.5 V until a current reached 0.05 C.

### (Discharge)

After rest for 20 minutes, the test cell was discharged at 25°C at a constant current of 0.1 C until the cell voltage reached 2.5 V.

### [Trickle Test]

The evaluation target test cell was subjected to the above charged and discharged with two cycles, and then charged at a constant current of 0.2 C until the cell voltage reached 4.3 V. Thereafter, the test cell was left to stand under a temperature environment at 25°C for 72 hours, and subjected to trickle charge for keeping the cell voltage to 4.3 V to measure an integrated quantity of electricity required for this charge. Further, the test cell was charged at a constant current of 0.2 C until the cell voltage reached 4.5 V. Thereafter, the test cell was left to stand under a temperature environment at 25°C for 72 hours, and subjected to trickle charge for keeping the cell voltage to 4.5 V to measure an integrated quantity of electricity required for this charge.

**[Table 1]**

| | Charge-discharge efficiency | Integrated quantity of electricity (4.3V) | Integrated quantity of electricity (4.5V) |
|---|---|---|---|
| Experimental Example 1 | 91.94% | 7.44mAh/g | 8.40mAh/g |
| Experimental Example 2 | 91.66% | 9.45mAh/g | 10.35mAh/g |

As obvious from the results shown in Table 1, the test cell of Experimental Example 1 exhibits a small integrated quantity of electricity in the trickle test compared with the test cell of Experimental Example 2. That is, it is considered that use of the positive electrode active material having the above solid electrolyte coating inhibits side reactions on the positive electrode and consequently reduces oxidation current derived from the side reactions.

### <Experimental Example 3>

The lithium-ion-containing phosphonylated cellulose synthesized in Experimental Example 1 and PEG having Mn of 1000 were mixed so that a mole ratio between Li and EO was 1:20, and this mixture was dissolved in water to form an aqueous solution. Aqueous solutions of them may be separately prepared and then mixed. The aqueous solution was applied on a glass substrate, and the dried solid was molded into a film shape to obtain a solid electrolyte film having a thickness of 250 µm. This solid electrolyte film was sandwiched between lithium metal to form a non-blocking electrode, and this non-blocking electrode was disposed in a measurement cell to measure a direct-current resistance and an alternating-current resistance.

An ion conductance and a Li⁺ transport number of the solid electrolyte film were as follows.
σ₊: 2.9×10⁻⁹ S/cm
σ_{+,-}: 3.2×10⁻⁹ S/cm
Li⁺ transport number: 0.91 = σ₊/σ_{+,-}

The composition for a solid electrolyte used in Experimental Example 3 has, for example, the ion conductance and Li⁺ transport number that are a practical level as an electrode coating agent with a thickness of several tens of nanometer.

### REFERENCE SIGNS LIST

10 Non-aqueous electrolyte secondary battery, 11, 51 Positive electrode, 12, 52 Negative electrode, 13 Separator, 14 Electrode assembly, 16 Exterior housing can, 17 Sealing assembly, 18, 19 Insulating plate, 20 Positive electrode lead, 21 Negative electrode lead, 22 Grooved portion, 23 Internal terminal plate, 24 Lower vent member, 25 Insulating member, 26 Upper vent member, 27 Cap, 28 Gasket, 30 Positive electrode active material, 31 Lithium-containing composite oxide, 32 Coating, 53 Solid electrolyte film

## Claims

1. A composition for a solid electrolyte, including:
a first polymer in which an acidic functional group having an alkali metal ion is bonded to a main chain; and
a second polymer having an electron-donating polar group.

2. The composition for a solid electrolyte according to claim 1, wherein the acidic functional group is a phosphorous acid group.

3. The composition for a solid electrolyte according to claim 1 or 2, wherein the main chain of the first polymer is cellulose.

4. The composition for a solid electrolyte according to any one of claims 1 to 3, wherein the second polymer is at least one of polyethylene glycol or polyethylene oxide.

5. A non-aqueous electrolyte secondary battery, comprising:
an electrode; and
a non-aqueous electrolyte, wherein
a coating composed of the composition for a solid electrolyte according to any one of claims 1 to 4 is formed on at least a part of a surface of the electrode or on particle surfaces of an active material constituting the electrode.

6. The non-aqueous electrolyte secondary battery according to claim 5, wherein the coating is formed on particle surfaces of a positive electrode active material.
